(19) Europäisches Patentamt / European Patent Office / Office européen des brevets

(11) **EP 3 163 533 A1**

(12) **EUROPEAN PATENT APPLICATION**

(43) Date of publication:
**03.05.2017 Bulletin 2017/18**

(51) Int Cl.:
***G06T 3/40*** *(2006.01)*

(21) Application number: **15191864.6**

(22) Date of filing: **28.10.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Continental Automotive GmbH
30165 Hannover (DE)**

(72) Inventors:
• **Gao, Lingjun
Uckfield, TN22 5BZ (GB)**

• **Genua, Vanni
Lewes, BN7 2SG (GB)**
• **Guerreiro, Rui
Brighton, BN1 5PP (GB)**
• **Javed, Nauman
Brighton, BN2 9NN (GB)**
• **Silva, Carlos
Eastbourne, BN21 1EL (GB)**
• **Waite, Tony
Shoreham, BN43 5QG (GB)**

(74) Representative: **Büchner, Jörg
Conti Temic microelectronic GmbH
Intellectual Property
Sieboldstrasse 19
90411 Nürnberg (DE)**

(54) **ADAPTIVE VIEW PROJECTION FOR A VEHICLE CAMERA SYSTEM**

(57) A method and a corresponding device for providing an adaptive view in a vehicle camera system. Image data is received from a vehicle camera. A pre-determined driving scenario is selected and a display indicator that is indicative of a relevance of display modes in the driving scenario is computed based on data that includes the image data. A pre-determined display mode of an image processing device is selected, wherein the selection depends on the driving scenario and on the display indicator, and the image data is processed according to the pre-determined display mode.

FIG. 7

## Description

The present application relates to a method and a corresponding device for providing a scenario dependent virtual projection in a vehicle camera system.

Among others, it is an object of this application to provide an improved method for generating a scenario dependent projection of the 3D scene in a vehicle camera system, a corresponding image processing device, and a vehicle camera system with the image processing device.

The method according to the present specification can provide projection views adaptively and specifically to each image processing method and scenario. In other words, the projection views can be provided in real time and scenario dependent and, furthermore, the projection can be provided according to input data that is more useful for a given image processing method.

According to one method of providing a projection adaptively, a plane is assigned to a portion of the scene. Among others, detected features of the image, such as 3D constraints of parallelism, coplanarity, collinearity, and orthogonality can be used to assign the plane.

Different from solutions with a static view, a projection view according to the present specification can be provided dynamically. In the top-down view, the image is transformed such that it appears as a bird's eye view, looking down from above the car. Thereby, a number or a signage written on the ground can be seen and analysed clearly by the driver or by an algorithm, with little or no perspective distortions, regardless of where its location in relation to the vehicle. The top-down view is furthermore useful for the driver, as it provides a good non-distorted generic view of the scene around the vehicle, which is also referred to as a surround view.

In a static projection view the projections are constant. For example, a constant top-down view always simulates that one sees the scene from the top. In some scenarios there are points of view that are more descriptive than others. For example, if a driver is trying to avoid damaging the front spoiler of the vehicle, a top-down view is not helpful, since information regarding the height of objects is not discernible in that view. A different type of projection is preferred in this scenario. For example, when the projection gives the appearance that the scene is seen from the vehicle onwards, or in a "front ahead view", the view provides the driver with a clear view of the obstacle height. Thereby, the front ahead view helps the driver to decide whether the obstacle would harm the vehicle but the indication of the position of the obstacle is less clear.

The subject matter of the present specification addresses situations in which there are points of view which are more descriptive than others. The projection method according to the specification provides a scene from a perspective that is as descriptive as possible to the driver or to a processing algorithm. This can be achieved by switching between possible preset projections, such as top-down view and front-ahead view or a 45 degree view, or by computing dynamically which are the best angles to show to the driver in a display or to provide to algorithms. The new view point can also be a moving one, for example moving around an obstacle in order to give the driver a very clear picture of the 3D scene.

The specification discloses an example tailored to a cross-traffic alert application, where the intention is to provide the driver or algorithms with a view from the front of the incoming cross traffic. The driver or the algorithms can easily discern if the oncoming traffic is on the lane where the driver intends to go, if the traffic is crossing the lane at the same time etc. without the usual error-prone and potentially dangerous guesswork that involves trying to figure out the perspective issues by oneself.

According to another example, the view is adjusted, possibly continuously, so that obstacle characteristics are clearly visible to the driver or to algorithms, for example by showing a top down view when the obstacles are further away but to change progressively to a front-ahead view as the own vehicle approaches the obstacle, or to switch or to change progressively to a side view. Some of these views may be artificially generated from known 3D information captured from the scene.

According to one embodiment, the location of a vanishing point is determined from image data of a vehicle camera. The vanishing can refer to a static vanishing point according to perspective projection or also to a focus of motion, which can be a focus of expansion or a focus of contraction.

According to the present specification, a derived plane can be used as an input to further image processing methods. By way of example, the derived plane of motion can be used as input to a method for determining the position of a vehicle in the scene relative to the road plane.

In particular, the present specification discloses a computer implemented method for providing an adaptive view in a vehicle camera system.

Image data with image frames is received from a vehicle camera of the vehicle camera system and a pre-determined driving scenario of the vehicle is determined. The automatic determination of the driving scenario may be based on data that includes the image data, on a user input from a driver, on a sensor input. It may also be based on a combination of those inputs. In one example, a parking scenario is chosen based on a selection of a reverse gear and on an analysis of the scene. In another example, a selection of a cross-traffic scenario is entirely based on the image data.

In particular, the derived position, orientation, object type and the velocity of one or more objects in the scene can be used to determine which driving scenario is selected in a given situation. Furthermore, other information such as the engaged gear, the speed of one's own vehicle and other sensor data can be used to determine an appropriate driving scenario.

Some examples of driving scenarios are a cross traffic alert scenario, a speed bump approaching scenario, a curb-side parking scenario, and a reversing or rearward driving scenario in an area with poles. In the last case, the chosen scenario depends on the detection of one or more poles in the image and on the engaged gear. In particular, the selected scenario can depend on an identification of an image property that relates to the object, such as a focus of motion, the shape of the street bump or of the poles, a height and distance of the curb etc.

A display indicator is computed, which is based on data that includes the image data. The display indicator is indicative of a relevance of one or more pre-determined display modes to a driver in the pre-determined driving scenario. For example, the display indicator may be indicative of the proximity of an obstacle in a surrounding scene that is displayed or contained in the image data. Among others, the display indicator can be indicative of a distance to a pole, a speed bump, a wall, a road curb or an approaching vehicle in a cross-traffic scenario. Furthermore, the display indicator can also be indicative of the presence of an obstacle in the image data or of some other features of the obstacle, such as its height, size, shape, orientation, speed and heading.

Among others, the display indicator can comprise one or more numeric values which represent properties of objects that are displayed in the image data, their mutual relationship or also numeric values derived thereof, such as a likelihood of collision.

A pre-determined display mode of an image processing device is selected from the one or more pre-determined display modes. The selection of the pre-determined display mode depends on the previously determined driving scenario and on the previously computed display indicator. As described below in further detail, the pre-determined display mode also comprises display modes that change dynamically depending on the image data and, optionally, on further sensor input.

The image data is processed according to the pre-determined display mode and is forwarded to a display, to an image display algorithm or to a further image processing algorithm or method. Among others, the forwarding may be carried out by sending data over a data line or also by passing arguments to a function or a module of a computer program.

According to one aspect of the method, multiple views are used in the same scenario, wherein at least one of them is provided based on the display indicator. For example, in a parking scenario a top-down view is provided and in addition one or more other views are provided which indicate the curb or other objects in the proximity of the present vehicle.

Even when only one view is used for a particular scenario at any given time, the selected view can change dynamically while the scenario is active. In other words, a typical scenario of "parking" can be associated with a multitude of scenarios, views or display modes, for example parking with a curb on the right and a vehicle in the back, parking with a curb behind and a pole at the right, etc.

A display system according to the present specification "looks" at the surroundings, or, in other words, analyses the image data of the vehicle camera and determines a suitable way to provide the driver with the most relevant information at any given time. This can also imply not to display certain information. For example, if a pole is still at a safe distance but another vehicle comes within a safety margin of the present vehicle, the display shows a view of the other vehicle instead of showing the surroundings of the pole and vice versa.

For example, in the cross traffic alert scenario a head-on display mode could be chosen for showing a head-on view of a car in front of a present car. In the curb-side parking scenario a side view display mode could be chosen. In the speed bump approach scenario a head on view could be chosen, and a height of the bumper could computed and indicated in relation to car clearance or warning signal generated, among others.

A display mode or view that is used at a given time, and which corresponds to a driving scenario, can be selected in many different ways.

One of the possible ways comprises predefined "scenarios", such as a vehicle approaching an intersection, where a set of types of views are used. For example, in the scenario where a vehicle approaches an intersection, it may be important to show a top down view, so that the driver doesn't go beyond the marking and can have a general view of the surroundings; then it may be important to switch to a view of the vehicles approaching. The view may also change in a fluid way, so that the driver can see that is on the left and/or on the right side.

Another scenario can be a parking scenario, with the classic top-down view but also an angled one where the curb height and location with respect to the vehicle is clearly visible, so that the driver can see it and avoid it without having to be through guesswork, as usual in parking next to curbs and which often leads to damaged wheel rims.

Another scenario is to assess the height of speed bumps, to avoid harming the front spoiler of the vehicle. Another scenario is when reversing onto areas that have poles, which are very small on top-down images.

By taking a computed 3D of the scene and by computing, based on some perception and on some danger metric, the most relevant information to focus on and how to show it. This can be based on ergonomics studies, etc. The best way to show the most relevant information at any given time is computed adaptively and used to determine the data that is displayed.

Other ways of selecting a view are also possible.

The views can be computed by

-    assuming a part of the image is in a plane and using a homographic transformation,

- by computing the 3D structure of the scene using whichever sensors and computing the view using graphics rendering,
- by estimating the 3D of the scene with sensors that are not visual for example ultra-sound and showing an artificial 3D representation. The aforementioned methods can be used in the alternative or they can also be combined, or there can be by other ways to achieve a desired view.

The image data is processed according to the selected display mode. In other words, a view is generated according to the selected display mode. This may involve generating a projection to a surface according to the selected display mode. The processed image data is forwarded for use in other image processing methods or algorithms, for use in image display methods or the processed is converted into display control signals, which are sent to a display.

In particular, the display mode can be a projection that is provided dynamically, depending on input data such as the image data and other sensor data. The projection can be provided by a pre-determined projection, a projection that is at least partially derived from the image data, or also a projection which is at least partially derived from other sensor data. Among others projection can comprise a projection to a surface of an object or to a surface parallel to a surface of an object.

The object surface can be derived from the image data, by using vanishing points or from other 3D constraints which are derived from the image data, from other sensor data and implicit assumptions about the scene structure. In particular, the projection can be defined relative to a direction of motion. The direction of motion can be derived from the image data, for example by identifying a focus of motion.

According to a further embodiment, the method comprises gradually transitioning from a first pre-determined projection to a second projection, for example by rotating a projection surface until it coincides with a projection surface of the second projection.

According to a further embodiment an object or obstacle is detected in the image data, and a projection is generated that moves in relation to the obstacle. For example, the moving projection can be provided by multiple projections that have different positions and orientations with respect to a derived position and orientation of the obstacle. The orientations of the projections may be very similar, so that the impression of a continuous movement is generated or the difference may be greater, such that the effect of a stepwise motion is created.

According to a further embodiment, a location of a vanishing-point is determined in an image frame of the image data. A position of a reference surface is derived with respect to a camera coordinate system based on the location of the vanishing point. The reference surface corresponds to a surface in a surrounding scene of the vehicle camera. The projection is provided as a projection to the reference surface.

According to a further embodiment, the vanishing point is a focus of motion. An optical flow is determined from the image data and deriving the position of the focus of motion in the image frame using the optical flow. In particular, this can be provided by assigning motion vectors to points of an image frame and deriving the position of the focus of using the assigned motion vectors.

In a further embodiment, an orientation of a car in front of a present car is derived based on the position of the focus of motion. In a further embodiment, a bounding box around the car is derived based on the orientation of the car.

According to a further embodiment, the method comprises tracking a motion of the vanishing point and deriving the location of the vanishing point from the tracked motion of the vanishing point.

Furthermore, the current specification discloses a computer program, the computer readable program comprising computer readable code for executing the method, and a computer readable storage medium with the computer.

In a further aspect, the current specification discloses an image processing device for a vehicle camera. The image processing device comprises an input connection for receiving image data from a vehicle camera and a computation unit.

The computation unit is connected to the input connection and is operative to perform the abovementioned image processing method by providing suitable hardware components such as a microprocessor, an ASIC, an electronic circuit or similar, a computer readable memory, such as a flash memory, an EPROM, an EEPROM, a magnetic memory or similar.

In particular, the computation unit is operative to determine a pre-determined driving scenario of the vehicle and to compute a display indicator based on data that includes the image data. The display indicator is indicative of a relevance of one or more pre-determined display modes to a driver in the pre-determined driving scenario.

The computation unit is operative to select a pre-determined display mode of an image processing device. The selection of the pre-determined display mode depends on the driving scenario and on the display indicator. Furthermore, the computation unit is operative to process the image data according to the pre-determined display mode.

Furthermore, the current specification discloses a kit with a vehicle camera and the image processing device, wherein the image processing device is connectable to the vehicle camera, for example by a dedicated cable or via an automotive data bus.

Furthermore, the current specification discloses a vehicle with the kit, wherein the vehicle camera is mounted to the car such that the vehicle camera is pointing to an exterior scene. For example, the image processing device can be provided as part of the vehicle camera or it can be installed in the car as a part of the car electronics and be connected to the vehicle camera via a dedicated cable or via an automotive data bus.

The subject matter of the present specification is now explained in further detail with respect to the following Figures in which

Fig. 1    shows a car with a surround view system,
Fig. 2    illustrates a projection to a ground plane of an image point recorded with the surround view system of Fig. 1,
Fig. 3    illustrates in further detail the ground plane projection of Fig. 3,
Fig. 4    shows a derivation of vanishing points from a scene containing a city skyline,
Fig. 5    illustrates the derivation of an orientation of a side surface of cubic object,
Fig. 6    shows a use of rectifying homographies according to the specification, and
Fig. 7    shows the derivation of a local focus of expansion in a cross traffic alert scenario.

In the following description, details are provided to describe embodiments of the application. It shall be apparent to one skilled in the art, however, that the embodiments may be practiced without such details.

Some parts of the embodiments have similar parts. The similar parts may have the same names or similar part numbers. The description of one similar part also applies by reference to another similar parts, where appropriate, thereby reducing repetition of text without limiting the disclosure.

The following common definitions shall apply.

A digital camera has an optical lens and an image sensor, which includes a plurality of pixel sensors. The optical lens is used for receiving light rays from an object that is placed in front of the camera. The optical lens allows the light rays to pass through the optical lens, for travelling to the image sensor.

Calibration parameters are used to describe characteristics of the camera. These calibration parameters comprise intrinsic parameters and extrinsic parameters.

The extrinsic parameters are used to define a translation and a rotation of a reference frame of the camera for aligning the location and the orientation of the camera reference frame with the location and the orientation of a known reference frame of the world. The world refers to an area wherein the camera is located. Values of the extrinsic parameters change in accordance to a use or an application of the camera.

Intrinsic parameters act to link or map pixel coordinates of an image of the image sensor with corresponding coordinates of the camera reference frame. The coordinates often refer to a set of numbers for describing a position. In effect, the intrinsic parameters relate coordinates of light rays at the optical lens to corresponding coordinates of pixel sensor of the image sensor.

In a general sense, the light rays refer to electromagnetic radiation that can be visible or invisible. An example of the invisible light rays is infrared light rays.

The mapping between the pixel coordinates of the sensor image and the coordinates of the camera reference frame, which is defined by the intrinsic parameters, is often non-linear, for example in a case when the camera optical lens is provided in the form of a wide-angle lens. The intrinsic parameters, which are defined in a factory that produced the camera, often have fixed values that are stored in a memory unit of the camera.

The intrinsic and extrinsic parameters are used to relate a coordinate of a point in the world to a coordinate of a corresponding point in the image sensor of the camera. Furthermore, an image processing system uses the extrinsic and intrinsic parameters to generate a virtual projection.

A virtual projection, such as a top down view is often used in image processing system of vehicle camera. The virtual projection can be used for visualization, for example in a parking lot display, but also to simplify calculations.

The top down view is used to represent the plane in the ground as if it was captured from a virtual camera standing above the vehicle. This is used, for example, in automatic parking because line markings are linear, i.e. not curved, in this projection.

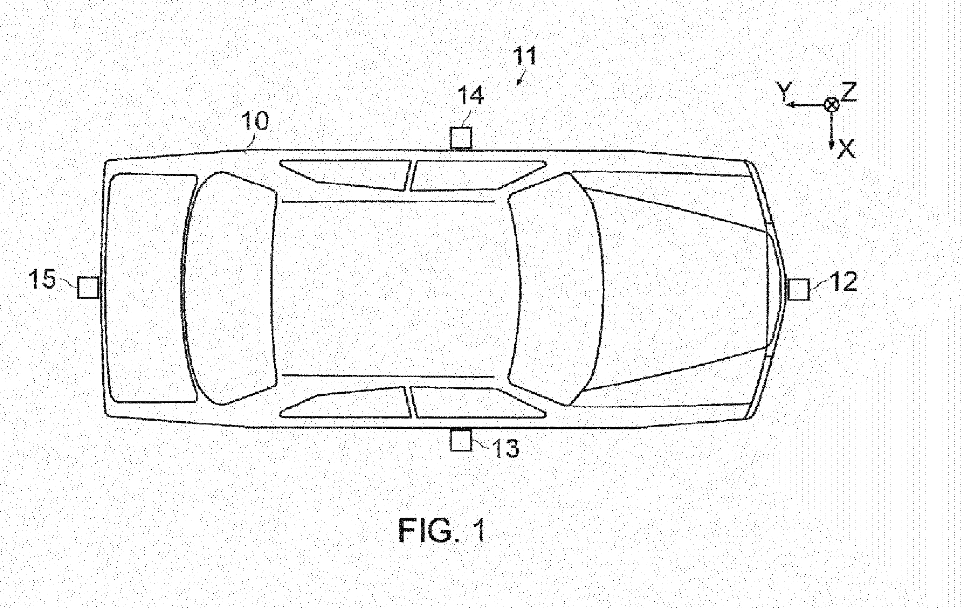

Figure 1 shows a car 10 with a surround view system 11. The surround view system 11 comprises a front view camera 12, a right side view camera 13, a left side view camera 14 and a rear view camera 15. The cameras 11 - 14 are connected to a CPU of a controller, which is not shown in Fig. 1. The controller is connected to further sensors and units, such as a velocity sensor, a steering angle sensor, a GPS unit, and acceleration and orientation sensors.

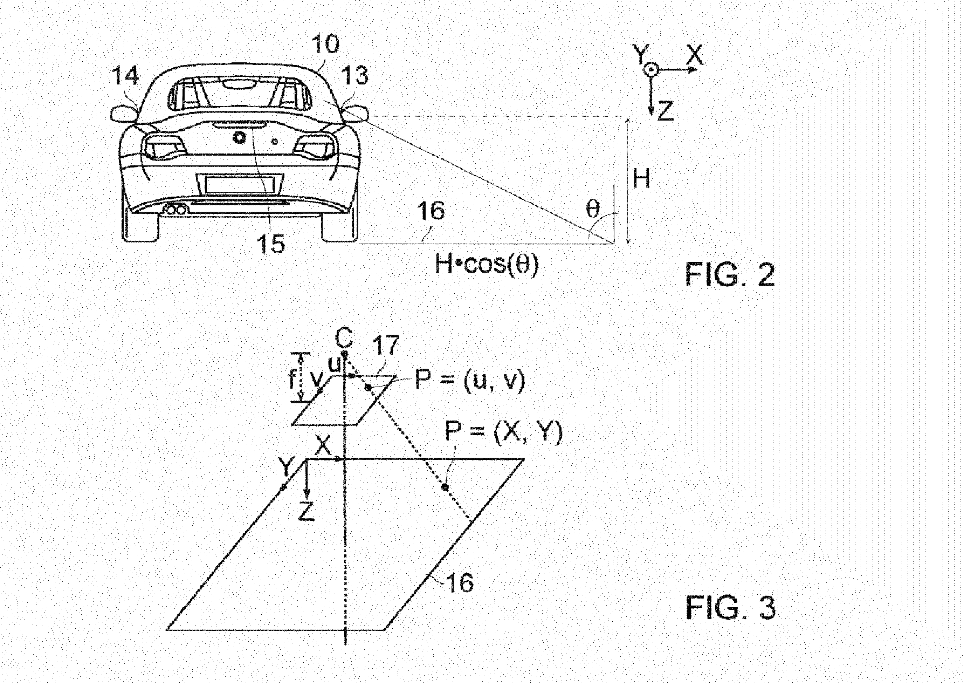

Figs. 2, 3 and 4 show a projection to a ground plane 16. Fig. 2 shows a projection of an image point to a ground plane 16. An angle of inclination θ relative to the vertical can be estimated from a location of the image point on the image sensor of the right side view camera 13. If the image point corresponds to a feature of the road the location of the corresponding object point is the projection of the image point onto the ground plane.

In the example of Fig. 3, the camera 13 has an elevation H above the ground plane. Consequently, the correspond object point is located at a distance H*cos(θ) from the right side of the car 10. If an image point corresponds an object point on the ground plane, a projection of the image point to the ground plane represents the real position of an object point in the surroundings. An angle θ of incidence is derived from a location of the image point on the camera sensor. A location Y of the projection is then derived using the height H of the camera sensor above street level as Y = H * cos(θ).

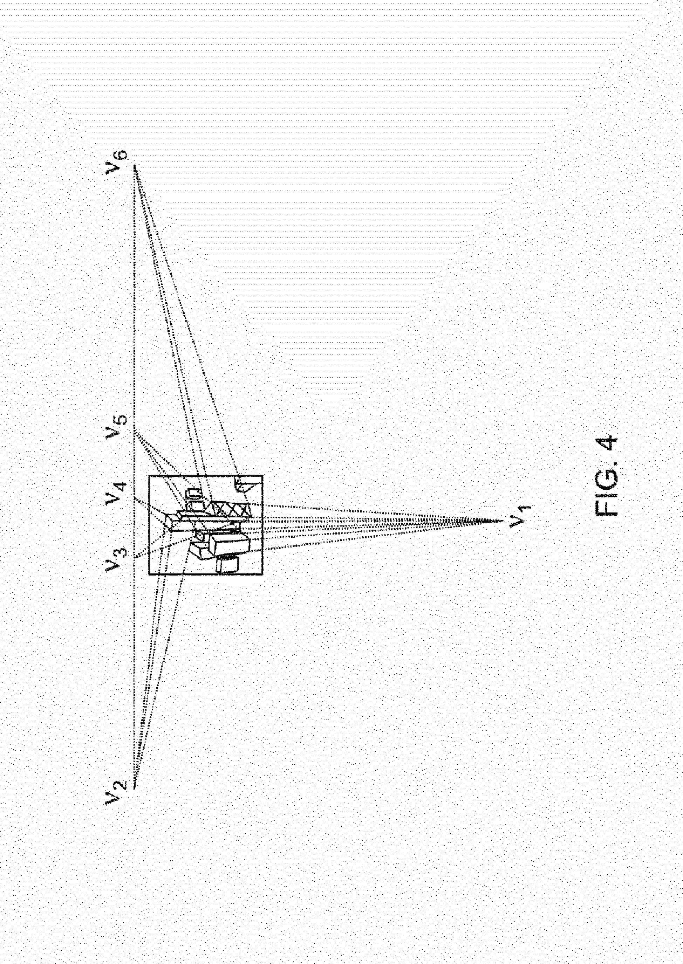

Fig. 3 shows an isometric view of the affine projection of Fig. 2. In Fig. 4, a point in a view port plane 17 is denoted by p = (u, v) and a corresponding point in the ground plane 16 is denoted by P = (X, Y). A distance between the view port plane 17 and a projection centre C is denoted by the letter "f".

The projection according to Fig. 3 relates to a pinhole camera projection, which is a simplified model of an actual imaging process of a vehicle camera. The projection of the vehicle cameras 12 - 15 also introduces lens distortions, which can be modelled by including a polynomial mapping into the simple pinhole camera model. Furthermore, the imaging process may introduce artifacts caused by the lens properties, lens contaminations, and by the sensor properties.

Among others, the image processing methods of this specification may refer to digitized images which are corrected for lens distortions, and in which straight lines are mapped to straight lines, or to image frames that are not corrected for lens distortions and in which straight lines of the scene appear as curved lines. The shape of the curved lines is determined by intrinsic camera parameters which relate to the properties of the camera lenses or the camera lens.

Fig. 4 shows a derivation of vanishing points from a scene containing five skyscrapers of a city skyline. A first vanishing point v1 is obtained from vertical lines of the skyscrapers, a second vanishing point v2 is obtained from first horizontal lines of the centre building, a third vanishing point v3 is obtained from horizontal lines of the building behind the right building, a fourth vanishing point v4 is obtained from second horizontal lines of the centre building. A fifth vanishing point v5 is obtained from horizontal lines of the left building, and a sixth vanishing point v6 is obtained from horizontal lines of the right building.

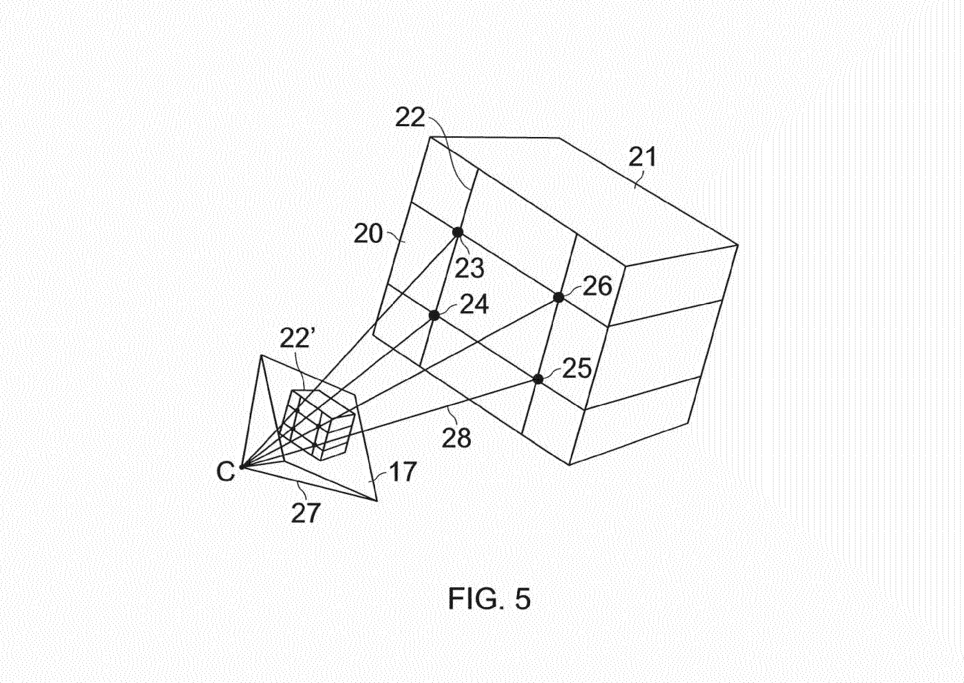

Fig. 5 illustrates the derivation of an orientation of a side surface 20 of cubic object 21. The cubic object provides a grid shaped pattern 22 on the surface. Lines of the grid shaped pattern intersect at feature points 23, 24, 25, 26. The cubic object 22 is projected to an image 22' of the cubic object 22 in the image plane 17. The projection is symbolized by the image pyramid 27 and the projection lines 28.

The corresponding feature points of the image 22' can be identified by feature recognition, such as line recognition and pattern recognition methods.

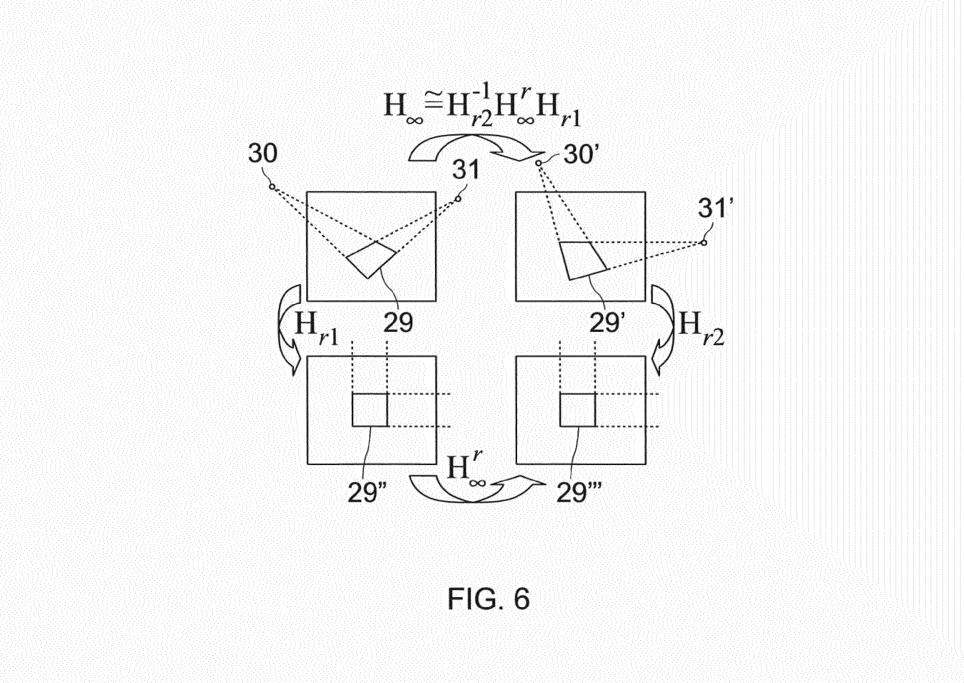

Fig. 6 shows, by way of example, a projected square 29 in a first image frame and in a second frame and a mapping from the first image frame to the second image frame. The square 29 has a first set of vanishing points 30, 31 in the first image frame and a second set of vanishing points 30', 31' in the second image frame.

Subsequent images of an image frame sequence can be transformed into each other with a homography, as long as they show basically the same features. When the present vehicle is moving, the image frames are recorded from different relative positions of the camera.

The infinite homography $H_\infty$ which transforms the first set of vanishings point 30, 31 to the second set of vanishing points 30', 31' can be decomposed into

$$H_\infty = H_{r2}^{-1} H_\infty^r H_{r1}$$

wherein $H_{r1}, H_{r2}$ refer to rectifying homographies which map the image points to a projection plane in which the vanishing points are at infinity and in which the first set of parallel lines is oriented along an axis of the plane. The images of the projected square 29 under the respective mappings are indicated by primed reference numbers 29', 29", 29"'.

The rectifying homographies $H_{r1}, H_{r2}$ can be determined by identifying the location of the respective vanishing points. When the rectifying homographies are provided adaptively, the object motions and dimensions can be provided for the rectified images. This in turn facilitates subsequent image processing tasks.

A projection of a rectangular structure, such as the projected square 29 of Fig. 5, could be obtained by using a line recognition of lines on a surface of an object. Alternatively, it could also be obtained by identifying a repetitive two-dimensional pattern on a surface of an object and using the underlying grid of the pattern as a rectangular structure.

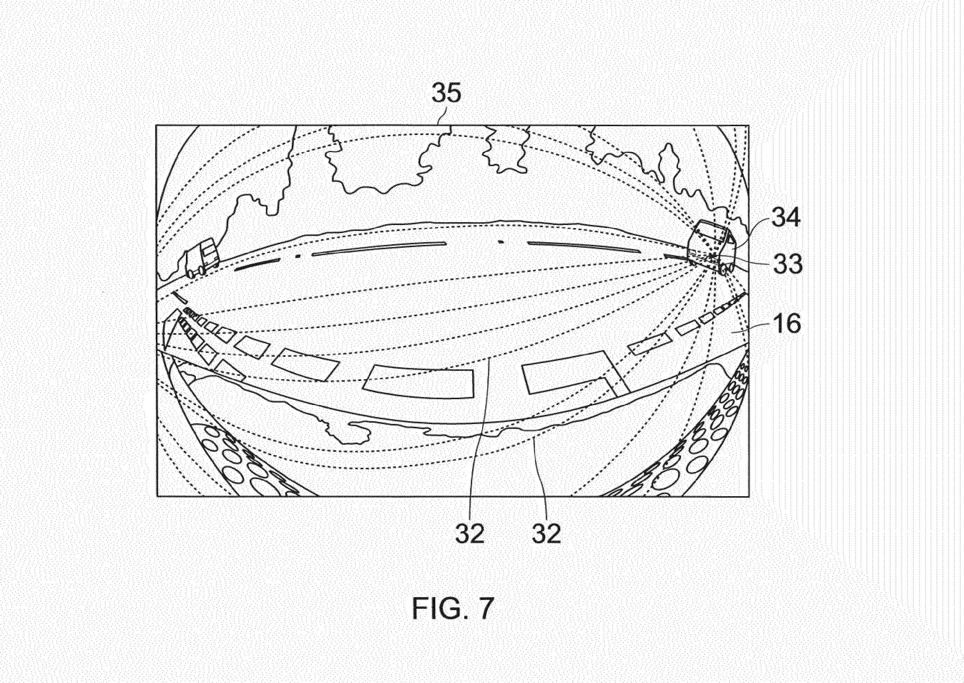

Fig. 7 shows an image frame 35 that is taken with a front view camera 12 when the present vehicle is at a junction, waiting to turn into the main road. In this situation, the present vehicle is at rest and only the vehicles on the main road are moving.

The moving vehicles have an associated focus of expansion or contraction, depending on whether they move towards or away from the vehicle camera. The respective FOE or FOC is derived from the motion of the image points that correspond to the moving vehicle.

When there are moving objects in the scene there can be multiple local FOE and FOC, which are associated with the moving objects in addition to the global FOE and FOC, which are generated by the relative motion of the present car with respect to the static portions of the scene, such as the trees and the road.

Fig. 7 shows a cross traffic alert scenario, in which a focus of motion is determined. The Cross-Traffic Alert (CTA) embodiment according to Fig. 7 relates to a method which can be used to determine the direction in which the vehicle is moving in the 3D scene. Given that information, a possible way to present this to the driver or to algorithms is by showing a simulated front view of the vehicle, so that the driver not only knows that a vehicle is approaching, but also in which lane it is located, etc.

Extrapolated lines radiate 32 from a focus of expansion 33 of an approaching car 34 and converge again in a focus of contraction, which is outside the view area of the image frame. In the projection of the vehicle camera the extrapolated lines 32 appear as curved lines due to the lens distortion.

The focus of expansion 33 in this particular scenario is located approximately at the left head light of the approaching car 34, which happens to be on the line that is parallel to the direction of instantaneous motion of the approaching vehicle and passes through the projection centre C of the vehicle camera 12.

The motion of the approaching vehicle 34 is parallel to the street surface, so the focus of expansion 33 is at the same height as the camera with respect to the street surface 16. In a situation as shown in Fig. 6, in which the vehicles move along straight trajectories, it can also be concluded that the lines 32 through the focus of expansion are parallel to the lateral boundaries of the approaching vehicle 34 and at a right angle to the front and rear boundaries of the approaching vehicle 34.

In the scenario of Fig. 6, the motion of the approaching vehicle 34 is not parallel to the road: the focus of contraction is to the left of the road boundary. If the road is straight, this means that the vehicle is driving towards the left boundary of the road. If the distortion correction of the known lens distortion is sufficiently accurate, it can be decided if the road is straight or curved.

According to an embodiment of the present specification, an image recognition method uses this information to generate a bounding box around the approaching car 34. This bounding box can be displayed on a display or it can also be used as input data for other purposes such as input data to a collision avoidance method.

Further aspects of the current specification are described in the following paragraphs. The further aspects, which can also be combined with other features of the present specification, involve the determination of one or more vanishing points and a projection to a reference surface that is defined by the vanishing points.

Image data with image frames is received from a vehicle camera of the vehicle camera system, the image data comprising image frames, and a location of a vanishing point is determined in an image frame of the image data. A position of a reference surface is determined relative to a camera coordinate system based on the location of the vanishing point, wherein the reference surface corresponds to a surface in a surrounding scene of the vehicle camera.

The derived location of the vanishing point is then used to define a projection plane. According to one embodiment, the method comprises switching or gradually transitioning to a projection which is provided by the projection plane. In one embodiment the switching or transitioning to the projection is carried out when one or more pre-determined conditions are fulfilled that determine which is the most useful projection view to provide to a display a driver or to an algorithm, for example the switching or transitioning may depend on a distance to an obstacle.

Furthermore, an image processing unit or method may continue to provide a second projection, such as a top down projection together with the projection to the projection plane that is determined by the vanishing point or the vanishing points. For example, a display may show a top down projection and a head-on projection side by side or it may show the head-on projection in an inset area of the display.

The motion of the image points is determined from the optical flow. Often, a feature based determination of image flow is impractical, given the number of possible points to match. However, if features have already been identified for other purposes, they can be used as well.

According to one embodiment, a location of a vanishing point is determined in an image frame of the image data. In particular, the vanishing point can be a perspective vanishing point or a focus of motion, such as a focus of expansion or a focus of contraction. In particular, the focus of motion can be derived from an optical flow which is in turn derived from the comparison of at least two image frames.

A focus of expansion (FOE) can be defined as an image point from which image points of an image region move away and a focus of contraction (FOC) can defined as an image point to which the image points apparently converge. In many situations, the focus of expansion and the focus of contraction are located in a motion plane, which is parallel to the motion of a present car.

A position of a reference surface is derived based on the previously identified location of the vanishing point, wherein the position of the reference surface comprises an orientation of the reference surface relative to a camera coordinate system. Furthermore, the position can also include a distance of an origin point of the reference surface relative to the centre of the camera coordinate distance. For example, the origin point may correspond to a corner or to some other identifiable point of an object surface in a surrounding scene.

In particular, the reference surface can be provided by a ground surface, which is usually equivalent to the street surface, by an object surface, such as a building façade or a side face of a car on the road, or by a bounding box surface of a bounding box of a neighbouring car. In general, the reference surface is a plane surface that corresponds to a surface in a surrounding scene of the vehicle camera.

In particular, the reference surface can be parallel to a surface of the scene. For example, the bounding box is parallel to a side surface of a car, when the side surface is approximated by a plain surface.

By way of example, the focus of motion can be computed from extrapolating motion vectors of an optical flow, which is derived from at least two image frames of the image data. Among others, the focus of motion can be determined as intersection point of straight or curved lines.

In a further embodiment, the method comprises rectifying a portion of an image frame by determining a projection plane which is parallel to the reference surface, and projecting image points of the portion of the image frame onto the projection plane.

In a further embodiment, the method comprises deriving an orientation of a neighbouring car based on the position of the focus of motion and deriving a bounding box around the car based on the orientation of the car. Furthermore, the derivation of the bounding box may also comprise the location of lateral boundaries of the car, which have been identified in the image.

According to a further embodiment, the reference surface is a ground plane and the method comprises deriving a position of the ground plane using a pre-determined camera height. According to a further embodiment, the method comprises determining at least one real world distance between image points, wherein the image points correspond to points on the ground plane.

For example, in one embodiment, one of the image points corresponds to a point on the lower boundary of a bounding box around a car in the surrounding scene. In this way, a distance from a vehicle coordinate system or a camera coordinate system the present car to the car in the surroundings can be derived if the extrinsic camera parameters are known from a previous camera calibration.

In a further embodiment, the method comprises detecting line segments which correspond to parallel lines of an object surface by using feature recognition. In particular, two sets of at least two parallel lines on the surface which are not all parallel can provide an orientation of a surface.

At least two vanishing points of the parallel lines are determined and an orientation of the object surface is derived from the positions of the vanishing points. Furthermore, a portion of an image frame is rectified by using the derived orientation of the plane to project the portion of the image frame onto a projection surface, which is parallel to the object surface.

Furthermore, the present specification discloses tracking a motion of the vanishing point, for example with a Kalman Filter, and deriving the location of the vanishing point from the tracked or predicted motion of the vanishing point.

Furthermore, the present specification discloses a computer program with computer readable code for executing the above-mentioned method and a computer readable storage medium with the computer program.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

**Claims**

1. A method for providing an adaptive display in a vehicle camera system, comprising

   - receiving image data from a vehicle camera of the vehicle camera system,
   - determining a pre-determined driving scenario of the vehicle,
   - computing a display indicator based on data that includes the image data, the display indicator being indicative of a relevance of one or more pre-determined display modes in the pre-determined driving scenario,
   - selecting a pre-determined display mode of an image processing device, wherein the selection of the pre-determined display mode depends on the pre-determined driving scenario and on the display indicator,
   - processing the image data according to the pre-determined display mode.

2. The method according to claim 1, wherein the pre-determined display mode is a projection.

3. The method according to claim 1 or claim 2, wherein the pre-determined driving scenario is a cross traffic alert scenario.

4. The method according to claim 1 or claim 2, wherein the pre-determined driving scenario is a speed bump approach scenario.

5. The method according to claim 1 or claim 2, wherein the driving scenario is a curb-side parking scenario.

6. The method according to claim 1 or claim 2, wherein the pre-determined driving scenario is a reversing to poles scenario that relates to reverting on an area with poles or pole-like obstacles.

7. The method according to one of the preceding claims,
   wherein the pre-determined display mode is a projection, the method comprising gradually transitioning from a first pre-determined projection to the projection.

8. The method according to one of the preceding claims,
   wherein the pre-determined display mode is a moving projection comprising

   - detecting an object in the image data,
   - generating a moving projection that moves in relation to the obstacle.

9. The method according to one of the preceding claims,
wherein the pre-determined display mode is a projection, the method comprising

- determining a location of a vanishing point in an image frame of the image data,
- deriving a position of a reference surface relative to a camera coordinate system based on the location of the vanishing point, wherein the reference surface corresponds to a surface in a surrounding scene of the vehicle camera,
- providing the projection as a projection to the reference surface.

10. The method according to claim 9, wherein the vanishing point is a focus of motion, the method comprising

- determining an optical flow from the image data,
- deriving the position of the focus of motion in the image frame using the optical flow.

11. A computer program, the computer readable program comprising computer readable code for executing the method according to one of the claims 1 to 10.

12. A computer readable storage medium, the computer readable storage medium comprising the computer program according to claim 11.

13. An image processing device for a vehicle camera, the image processing device comprising
an input connection for receiving image data from a vehicle camera,
a computation unit, the computation unit being connected to the input connection, wherein the computation unit is operative to determine a pre-determined driving scenario of the vehicle, to compute a display indicator based on data that includes the image data, the display indicator being indicative of a relevance of one or more pre-determined display modes in the pre-determined driving scenario,
the computation unit being operative to select a pre-determined display mode of an image processing device, wherein the selection of the pre-determined display mode depends on the driving scenario and on the display indicator,
and to process the image data according to the pre-determined display mode.

14. A kit, the kit comprising a vehicle camera and the image processing device according to claim 13, wherein the image processing device is connectable to the vehicle camera.

15. A vehicle with the kit of claim 14, wherein the vehicle camera is mounted to the car such that the vehicle camera is pointing to an exterior scene.

FIG. 1

EP 3 163 533 A1

FIG. 2

FIG. 3

FIG. 4

EP 3 163 533 A1

FIG. 5

FIG. 6

FIG.7

Europäisches
Patentamt

European
Patent Office

Office européen
des brevets

# EUROPEAN SEARCH REPORT

Application Number

EP 15 19 1864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Sean Michael Walls ET AL: "Alternative Images for Parallel Parking: A Usability Test of a Multi-Camera Parking Assistance System", , 1 March 2005 (2005-03-01), pages 1-80, XP55265898, Retrieved from the Internet: URL:http://www.google.de/url?sa=t&rct=j&q= &esrc=s&source=web&cd=1&cad=rja&uact=8&ved =0ahUKEwjs-pOP4JDMAhVH7xQKHbWwDOkQFggkMAA& url=http%3A%2F%2Fumich.edu%2F~driving%2Fpu blications%2FParallelReportFINAL.doc&usg=A FQjCNHr5sWoBjx3BUaAOuEp-ss1sjjKRw [retrieved on 2016-04-15] * page 9, paragraph 1 - page 10, last paragraph * ----- | 1-15 | INV. G06T3/40 |
| X | OKAMOTO ET AL: "Development of Parking Assistance System Using Virtual Viewpoint Image Synthesis", ITS WORLD CONGRESS, 1 November 2000 (2000-11-01), pages 1-8, XP002418339, * page 6, paragraph 3 - paragraph 4; figure 4 * ----- | 1-15 | |
| X | JP 2009 244660 A (HONDA MOTOR CO LTD) 22 October 2009 (2009-10-22) * paragraph [0007] - paragraph [0009]; claim 1; figure 10 * * paragraph [0077] - paragraph [0078] * ----- -/-- | 1-15 | |

TECHNICAL FIELDS
SEARCHED      (IPC)

G06T

The present search report has been drawn up for all claims

| Place of search | Date of completion of the search | Examiner |
|---|---|---|
| Munich | 18 April 2016 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 19 1864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FINTZEL K ET AL: "3D vision system for vehicles", PROCEEDINGS OF THE INTELLIGENT VEHICLES SYMPOSIUM, 9 June 2003 (2003-06-09), pages 174-179, XP002285561, * the whole document * | 1-15 | |
| A | ZHANG BUYUE ET AL: "A Surround View Camera Solution for Embedded Systems", 2014 IEEE CONFERENCE ON COMPUTER VISION AND PATTERN RECOGNITION WORKSHOPS, IEEE, 23 June 2014 (2014-06-23), pages 676-681, XP032649736, [retrieved on 2014-09-24] * the whole document * | 1-15 | |

TECHNICAL FIELDS
SEARCHED     (IPC)

The present search report has been drawn up for all claims

| Place of search | Date of completion of the search | Examiner |
|---|---|---|
| Munich | 18 April 2016 | Pierfederici, A |

EPO FORM 1503 03.82 (P04C01)

## ANNEX TO THE EUROPEAN SEARCH REPORT
## ON EUROPEAN PATENT APPLICATION NO.

EP 15 19 1864

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2016

| Patent document cited in search report | Publication date | Patent family member(s) | Publication date |
|---|---|---|---|
| JP 2009244660 A | 22-10-2009 | NONE | |

EPO FORM P0459

For more details about this annex : see Official Journal of the European Patent Office, No. 12/82